# EUROPEAN PATENT SPECIFICATION

(11) **EP 0 443 637 B1**
(45) Date of publication and mention of the grant of the patent: **20.07.1994**
(21) Application number: 91200004.9
(22) Date of filing: 02.01.1991
(51) Int. Cl.: A01K 80/00, A01K 73/00, A01K 74/00

(54) **Fishing vessel provided with means for moving a net essentially near or through the seabed and hauling in thereof**
Fischereifahrzeug mit einer Vorrichtung zum Manövrieren eines Netzes nahe beim oder durch den Meeresgrund und zum Einholen dieses Netzes
Bateau de pêche avec dispositif pour manoeuvrer le filet essentiellement auprès ou à travers le fond de la mer et appareil haleur pour ce filet

(30) Priority: 23.02.1990 NL 9000446
(43) Date of publication of application: 28.08.1991
(73) Proprietor: SCHEEPSWERF GEBROEDERS KOOIMAN B.V., NL-3336 LE Zwijndrecht (NL)
(72) Inventor: Sinke, Cornelis, NL - 4401 AC Yerseke (NL)
(74) Representative: de Bruijn, Leendert C.

(56) References cited:
- DE-C- 671 636
- FR-A- 517 147
- GB-A- 22 671

## Description

The invention relates to a fishing vessel according to the preamble of claim 1. Such a fishing vessel is known from DE-C-671,636. According to that specification the support is realized by the crossing point of several lines. One set of lines originates from the front bow of the vessel whilst another one is connected with its free end to an anchor positioned at the sea bottom.

Such a fishing vessel is not suitable for fishing and sailing at the same time because it is not possible to keep the support in the same position relatively to the vessel. During fishing for organisms lying on and in the sea bed, such as mussels, it is known to fish by dragging a net over and through the bed and in this way bringing organisms lying on the bed into the net. It is important here that the rope connecting the net to the fishing vessel should form an angle with the seabed which is smaller than a certain threshold value. Above that, the front side of the net is pulled up too much, so that the scraping part behind it no longer moves over/in the bed in the optimum manner, which results in a reduced fish yield. In fixing the angle, the height of the engagement point on the ship and the position thereof determine the length of the rope for the net. This length must be kept as short as possible in order to ensure that the action of hauling in the net and paying it out can take place in as short a time as possible. Originally, one rope was used for trawling and hauling home. This rope was engaged at the rear of the vessel at a level considerably higher than the deck. A first improvement was the art described above, involving fishing with a drag rope and hauling home rope. The drag rope was in this case engaged at a point at least flush with the deck at the front of the vessel.

The object of the present invention is to further reduce the length of the ropes forming the connection to the nets, in order to eliminate the above-mentioned disadvantages.

From GB-A-22671 A.D. 1914 a fishing vessel is known having two tiltable masts pivotly connected at both sides of the bow of a fishing vessel. The mast can be tilted downwardly under the sea line along the bow of the vessel.

This object is realized with a fishing vessel having the characterizing features of claim 1.

Fixing the support point and the drag rope at the underside of the bottom of the ship means that an even further shortening of the length thereof can be obtained. The fact that the drag line is shorter means that the ship is more manoeuvrable. For further shortening of the ropes, the support of the first (drag) rope can comprise an element projecting downwards relative to the bottom of the vessel. In this way it is also ensured that the drag rope remains away from the propeller. In order to prevent problems relating to the draught of the vessel from occurring, and to avoid the risk of running aground on sandbanks and the like, the projecting element is disposed so that it is essentially vertically displaceable relative to the bottom of the vessel, so that the latter cannot be damaged. Since the drag lines now engage under the vessel, when the vessel is sailing straight ahead the nets (trawls) will be located immediately behind it in its fairway, and not at the side, as is conventional. Conventionally the support was always achieved by means of lateral arms. These lateral arms were necessary for permitting unloading of the nets in a transverse movement relative to the vessel. According to a further embodiment of the invention, the support for the second rope is fitted at the rear of the vessel. The net is hauled in with this second rope. The net travels the shortest distance between the fishing place and the vessel.

According to a further advantageous embodiment, the support of this second rope for hauling home the net is fitted on a mast which is displaceable relative to the vessel, and which is provided with means for engaging the net. Through the displacement of the mast with the net engaged thereon, fully or partially automated unloading and replacement in the sea can be achieved. According to an advantageous embodiment, the mast is disposed so that it is displaceable along the tranverse centre line of the vessel. This means that, unlike the state of the art, where the vessel was unloaded at right angles relative to the longitudinal centre line of the vessel, unloading now takes place in the longitudinal direction of the vessel, which results in increased unloading speed, because this movement lies in line with the movement of hauling home.

According to an advantageous embodiment, the engagement means comprise an arm which is displaceable relative to the vessel. This means that when the net moves inwards the end thereof is taken up by the displaceable arm and is engaged by it. In this way, controled emptying of the net through interaction of the displaceable arm and displaceable mast takes place. According to a particularly simple embodiment, the mast and the arm are interconnected.

According to a further advantageous embodiment, the vessel is provided with a washing device, the inlet of which is placed near the unloading position of the net on the mast. In the state of the art washing took place by moving the net up and down repeatedly in the seawater near the vessel after hauling home. This method also produced a considerable lengthening of the unloading time. Due to the fact that washing is no longer carried out in the net, the net can be unloaded immediately and replaced, so that the fishing cycle time can be shortened. The haul is not washed until after unloading from the net.

The invention will be explained in greater detail below with reference to an example of an embodiment shown in the drawing, in which:
Fig. 1 shows in perspective side view a fishing vessel according to the invention with net during fishing;
Fig. 2 shows the device according to Fig. 1 in top view; and
Fig. 3 shows a detail of the fishing vessel according to Fig. 1, showing the unloading device for the nets in different positions.

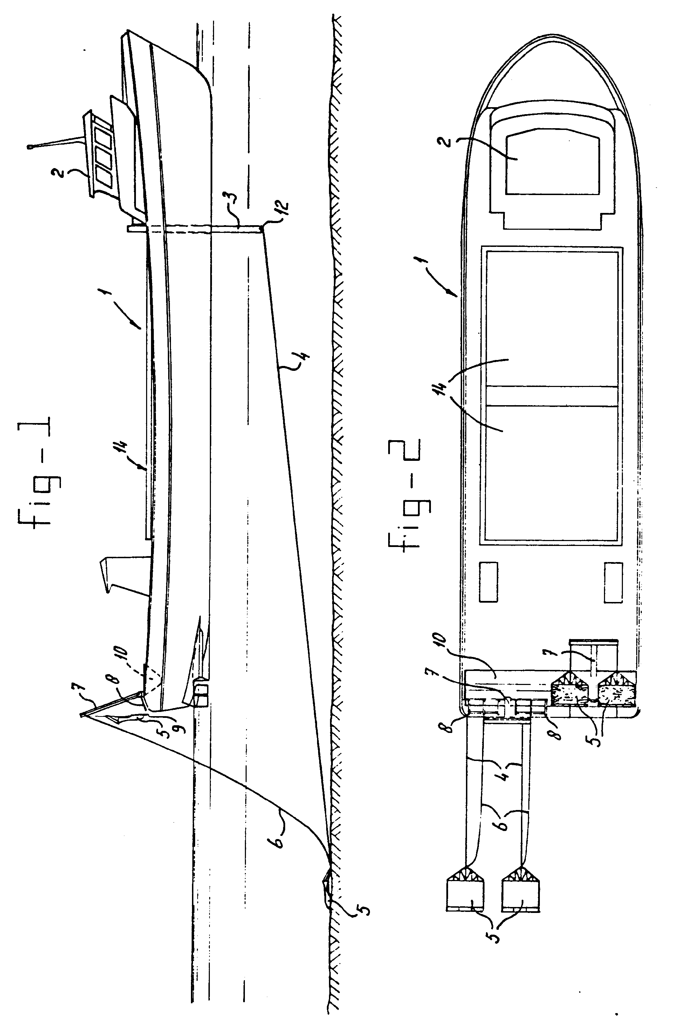

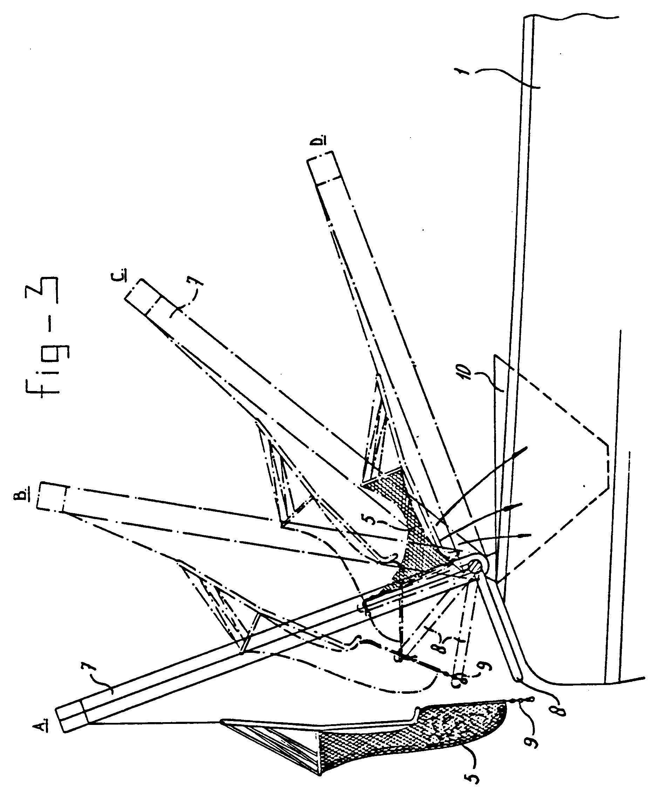

The fishing vessel according to the invention is indicated in its entirety by 1 in Fig. 1. Unlike the prior state of the art, the bridge 2 is now provided at the front of the vessel. Behind the bridge is a retractable support 3 for the drag line 4 (first rope), which is connected to a net 5. Also connected to net 5 is a fishing line (second rope) 6, whose other end engages on mast 7, which is disposed in a tilting manner on the afterdeck of the vessel. Mast 7 is tiltable, as can be seen from Fig. 3. An arm 8 which, as can be seen from Fig. 3, can engage on the rear side 9 of the net 5, is provided at the underside of mast 7. The net can move into the positions A-D. A washing plant 10, shown only schematically, is also present on the afterdeck of the vessel 1. Conveyor belts (not shown) run from this washing plant, to convey the mussels to the holds.

During the fishing of organisms, such as mussels, from the seabed it is important that the angle which the drag line 4 forms with the seabed does not exceed a determined value. If that angle exceeds that value, it can no longer be ensured that the organisms will be detached in the correct manner by the front of the net (knife). By providing the engagement point 12 (Fig. 1) of drag line 4 as low as possible, the length of drag line 4 can be kept as limited as possible. In the prior art engagement point 12 was always situated at least a few metres above the deck of the vessel. Due to the fact that the projecting element 3 is retractable, it can be prevented from becoming damaged in shallow water. Since the net 5 is closer to the vessel during fishing, and fishing line 6 is provided at the rear side of the vessel, when the fishing line 6 is being hauled home the net will move relatively quickly off the seabed, so that damage to organisms which are only partially gripped by the net is avoided. In the prior art the engagement point of the fishing line was half way along or further forward relative to the fishing vessel. During hauling home of the fishing line 6 for hauling home of the net 5, drag line 4 is always kept slack. It can be seen from Fig. 2 that two fishing nets 5 can be hauled home simultaneously and can be tipped over by a common mast 7 for emptying into washing tank 10. After the treatment in washing tank 10, the washed products can be stored in holds 14. Although for the sake of simplicity in Fig. 3 arm 8 is shown as being integral with mast 7, it must be understood that these parts can move independently or dependently with different movement paths. It is, for example, conceivable to make mast 7 and arm 8 tilt about pivot points displaced in the lengthwise direction, in which case they are connected by a coupling rod. In this way it can be ensured that the angular displacement of arm 8 is greater than that of mast 7. No means are indicated for the operation of mast 7, 8, but they can include any means known in the art, such as hydraulic cylinders, winch devices etc. Through the arrangement shown in Fig. 2 with a mast 7 for two nets it is possible to work particularly quickly with an extremely simple device.

It has been found that at least a 50% saving in operating time can be obtained compared with a conventional fishing vessel in which the nets rest on the seabed off the side of the ship at a great distance from it, and in which the nets are turned a quarter turn during hauling home because unloading takes place in the transverse direction relative to the vessel. Besides, the operation of mast 7 and arm 8 and the hauling home and paying out of the different lines is controlled entirely from the bridge 2, so that better conditions are produced for the crew.

An example is given below of the fishing method according to the prior art and that according to the present application at a water depth of 3 metres. In the prior art a length of 70 metres is required in order to maintain the required small angle between the drag line and the net. Hauling home takes 35 sec. The net is then washed in an up and down movement and unloaded moving at right angles to the deck, an operation which takes 65 sec. Finally, the net has to be paid out over a distance of 70 m, which takes 30 sec. With an average trawling time over the seabed of 35 sec., the total cycle time comes to 165 sec. In the case of the device according to the invention the drag line length can be considerably shorter at 8 m, and the hauling home time is accordingly 4 sec. Emptying takes place in only 20 sec, while the direction of movement of the nets does not involve turning through 90°. This means that this operation can be carried out in 28 seconds. With a trawling time of 35 seconds added, the total trawling time comes to 63 sec. This means a considerable shortening compared with the trawling time according to the state of the art. A calculation can be made in the same way if the water is 10 m deep. The traditional cycle time is in that case 327 seconds, while the trawling time according to the present invention is 238 seconds. In practice, a depth of 3 m is average, and 10 metres is the exception.

Although the invention is described above with reference to a preferred embodiment, it must be understood that numerous modifications can be made to it without going beyond the scope of the present application.

## Claims

1. Fishing vessel (1) provided with means (3,4,6) for moving a net essentially near or through the sea bed and hauling in thereof, the means for moving the net comprising a first rope (4) connected to the net and movably supported at the bow of the vessel below the water line and the means for hauling in comprising a second rope (6) connected to the net, characterized in that the support for the first rope is a rigid element (3) mounted at the bottom of the vessel, projecting downwardly therefrom and being essentially vertically retractable relative to the bottom of the vessel.

2. Fishing vessel according to claim 1, in which the support for the second rope is situated at the rear side of the vessel.

3. Fishing vessel according to any of the preceding claims, in which the support for the second rope is provided on a mast which is tiltable relative to the vessel and is provided with means for engaging the net.

4. Fishing vessel according to claim 3, in which the mast is fitted so that it is displaceable along a transverse axis of the vessel.

5. Fishing vessel according to claims 3 and 4, in which the engagement means comprise an arm which is displaceable relative to the vessel.

6. Fishing vessel according to claim 3, 4 and 5, in which the displaceable arm is fixed to the mast.

7. Fishing vessel according to any of claims 3-6, in which the vessel is provided with a washing device whose inlet is placed near the unloading position of the net at the mast.

8. Fishing vessel according to any of the preceding claims, provided with four nets.

## Patentansprüche

1. Fischereifahrzeug (1) mit einer Vorrichtung (3, 4, 6), um ein Netz im wesentlichen bis nahe an oder durch den Meeresboden zu bewegen und es davon einzuholen, wobei die Vorrichtung zum Bewegen des Netzes ein erstes Tau bzw. einen ersten Strang (4) aufweist, der mit dem Netz verbunden und beweglich an dem Bug des Fahrzeugs unterhalb der Wasserlinie gehalten ist, und die Vorrichtung zum Einholen ein zweites Tau bzw. Strang (6) aufweist, der mit dem Netz verbunden ist, **dadurch gekennzeichnet,** daß die Trageinrichtung für das erste Tau bzw. den ersten Strang ein starres bzw. steifes Element (3) ist, das am unteren Bereich bzw. am Boden des Fahrzeugs angeordnet bzw. montiert ist, sich davon abwärts erstreckt und im wesentlichen vertikal relativ zu dem unteren Bereich bzw. dem Boden des Fahrzeugs einziehbar bzw. rückholbar ist.

2. Fischereifahrzeug nach Anspruch 1, in welchem die Trageinrichtung des zweiten Taus an der rückwärtigen Seite bzw. dem Heck des Fahrzeugs angeordnet ist.

3. Fischereifahrzeug nach einem der vorstehenden Ansprüche, in welchem die Trageinrichtung für das zweite Tau auf bzw. an einem Mast bzw. Mastbaum vorgesehen ist, der relativ zu dem Fahrzeug neigbar ist, und die mit einer Einrichtung zum greifen bzw. halten des Netzes versehen ist.

4. Fischereifahrzeug nach Anspruch 3, in welchem der Mast bzw. Mastbaum so befestigt ist, daß er entlang einer transversalen bzw. schräg verlaufenden Achse des Fahrzeuges versetzbar bzw. verschiebbar ist.

5. Fischereifahrzeug nach Anspruch 3 und 4, in welchem die Greif- bzw. Halteeinrichtung einen Arm aufweist, der relativ zu dem Fahrzeug versetzbar bzw. verschiebbar ist.

6. Fischereifahrzeug nach Anspruch 3, 4 und 5, in welchem der versetzbare bzw. verschiebbare Arm an dem Mast befestigt ist.

7. Fischereifahrzeug nach einem der Ansprüche 3 bis 6, in welchem das Fahrzeug mit einer Reinigungseinrichtung versehen ist, dessen Einlaß nahe der Lösch- bzw. Entladestellung des Netzes an dem Mast angeordnet ist.

8. Fischereifahrzeug nach einem der vorstehenden Ansprüche, das mit vier Netzen versehen ist.

## Revendications

1. Bateau de pêche (1) muni de moyens (3, 4, 6) pour déplacer un filet sensiblement à proximité ou à travers du fond sous-marin et pour le remonter, les moyens pour déplacer le filet comportant un premier cordage (4) relié au filet et supporté de façon mobile à la proue du bateau au dessous de la surface de l'eau, et les moyens pour le remonter comportant un second cordage (6) relié au filet, caractérisé en ce que le support pour le premier cordage est un élément rigide (3) monté au fond du bateau, faisant saillie vers le bas depuis celui-ci et étant rétractable sensiblement verticalement par rapport au fond du bateau.

2. Bateau de pêche selon la revendication 1, dans lequel le support pour le second cordage est situé à la partie arrière du bateau.

3. Bateau de pêche selon l'une quelconque des revendications précédentes, dans lequel le support pour le second cordage est réalisé sur un mât qui peut basculer par rapport au bateau et est pourvu de moyens d'engagement avec le filet.

4. Bateau de pêche selon la revendication 3, dans lequel le mât est monté de manière à être déplaçable selon un axe transversal du bateau.

5. Bateau de pêche selon les revendications 3 et 4, dans lequel les moyens d'engagement comprennent un bras qui est déplaçable par rapport au bateau.

6. Bateau de pêche selon la revendication 3, 4 et 5, dans lequel le bras déplaçable est fixé au mât.

7. Bateau de pêche selon l'une quelconque des revendications 3-6, dans lequel le bateau est muni d'un dispositif de lavage dont l'entrée est placée à proximité de la position de déchargement du filet au niveau du mât.

8. Bateau de pêche selon l'une quelconque des revendications précédentes équipé de quatre filets.
